(19) Europäisches Patentamt
European Patent Office
Office européen des brevets

(11) **EP 2 072 387 A1**

(12) **EUROPEAN PATENT APPLICATION**

(43) Date of publication:
**24.06.2009 Bulletin 2009/26**

(51) Int Cl.:
***B62J 99/00*** *(2009.01)*    ***B62M 3/08*** *(2006.01)*

(21) Application number: **07150237.1**

(22) Date of filing: **20.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **NEDERLANDSE ORGANISATIE VOOR TOEGEPAST-NATUURWETENSCHAPPELIJK ONDERZOEK TNO**
**2628 VK  Delft (NL)**

(72) Inventors:
 • **Hoppenbrouwers, Marcus Benedictus**
 **5611 JX Eindhoven (NL)**
 • **Wijnen, Merijn**
 **5613 CN Eindhoven (NL)**
 • **Kalisvaart, Sytze**
 **5627 KW Eindhoven (NL)**
 • **Goede, Luuk**
 **1628 MR Hoorn (NL)**

(74) Representative: **Hatzmann, Martin**
**Vereenigde**
**Johan de Wittlaan 7**
**2517 JR Den Haag (NL)**

(54) **A cycling arrangement**

(57) The invention relates to a cycling arrangement comprising a pedal 2 mountable on a suitable pedal shaft 9 cooperating with a crank 9a. The pedal 2 cooperates with a cleat 7. The cleat 7 comprises an attachment point for a suitable plurality of sensors for determining applied forces by a foot of the user (not shown) to the cleat 7. Movements of the pedal during cycling are used to determine at least angle and/or an angular velocity of the pedal and/or crank as a function of time.

## Description

Field of invention

The invention relates to a cycling arrangement comprising a pedal connectable to a pedal shaft and conceived for determining a set of parameters related to a use of the pedal during cycling.

Background of the invention

An embodiment of a cycling arrangement as is set forth in the opening paragraph is known from an article "An improved accuracy six-load component pedal dynamometer for cycling", by T. Boyd et al, J. Biomechanics, Vol. 29, No.8, pp. 1105 - 1110, 1996. The known arrangement is constructed for determining constraint loads developed in a knee of the cyclist for analysing knee overuse injury due to strain. The known arrangement comprises a dynamometer arranged in the pedal of a bicycle for determining respective loads incurred at the foot/pedal interface. In the known arrangement seven sensors are positioned in the pedal so that four of them support and measure loads in the vertical direction, two of them support and measure loads in the horizontal direction and one supports loads in a third perpendicular direction. Suitable moments are collected using data of these seven sensors. The sought strain can be determined based on the data from the individual sensors and a suitable calibration matrix.

It is a disadvantage of the known cycling arrangement that a limited information on the use of the pedal during cycling is obtainable, although a complex measurement arrangement is used.

Summary of the invention

It is an object of the invention to provide a cycling arrangement enabling determination of a plurality of usage characteristics for cycling or cycling simulation activity.

To this end the pedal in the cycling arrangement according to the invention comprises:

a first plurality of sensors for determining a *set* of forces executed on the pedal in use; and
a second plurality of sensors for determining at least an angle and/or an angular velocity of the pedal as a function of time.

The technical measure of the invention is based on the insight that by suitably arranging the first plurality of sensors and the second plurality of sensors in the pedal the forces applied by the cyclist and/or the produced power can be determined. Preferably, the first plurality of sensors is arranged to determine a force applied transversely, notably perpendicularly, to the pedal, as well as forces applied laterally in a plane of the pedal and backwards with respect to the pedal as well as the torques exerted on the pedal. Examples of suitable sensors comprise flat-force sensors, for example streching strips, piezo-sensors, hall-sensors, etc. Preferably, the second plurality of sensors is arranged to measure an angle between the pedal with respect to the shaft and/or with respect to a suitable outside reference, for example a horizontal or a vertical line, or the like.

Data collected by the first plurality of sensors and the second plurality of sensors is suitably processed for enabling determination of the power produced by the cyclist, preferably in real time. For example, per se known algorithms of Kalman filtering or complementary filtering can be used for this purpose. The corresponding data can be fed-back to the cyclist or the coach using suitable wireless communication means. The measured data can also be used for determination of cycling technique. This data can be fed-back to the cyclist or coach to assist in improving the cycling technique.

In an embodiment of the cycling arrangement according to the invention, the pedal comprises a first portion and a second portion, preferably a cleat, fixedly cooperating with the first portion, the first plurality of the sensors being arranged in the first portion.

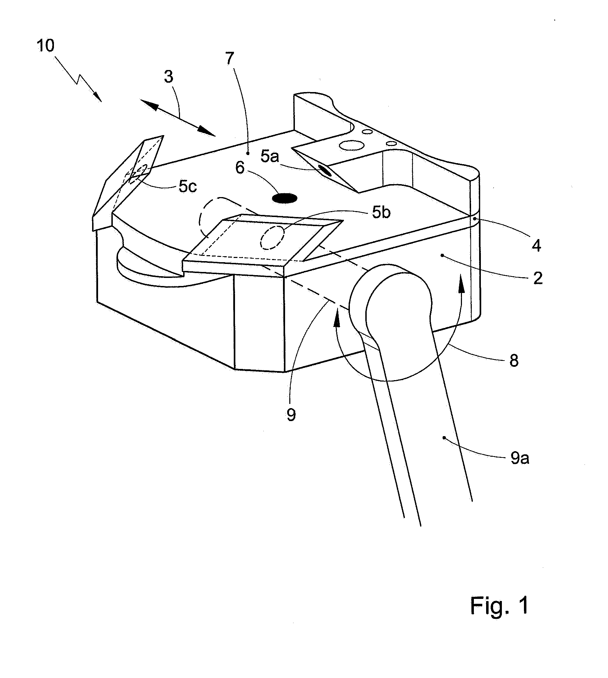

It is found to be advantageous to provide the pedal comprising a first portion, notably a base for cooperation with the shaft and a second portion, which may be removably arranged on the first portion and comprising the first plurality of sensors. A suitable example of the second portion is a cleat for fixedly cooperating with a shoe or a foot of the cyclist. The second portion (i.e. the cleat) is preferably shaped as a means for connecting to the first plurality of sensors for measuring forces. For example, four sensors may be used as is shown in Figure 1.

In a further embodiment of the cycling arrangement according to the invention the second plurality of sensors comprises an optical device or a magnetic device for determining the angular position or angular velocity of the pedal about the pedal shaft.

Preferably, the optical device comprises a pattern arranged on the shaft and an encoder. Preferably the encoder comprises an optical reader arranged for reading the pattern or for measuring a frequency of at least a pattern element in use. The magnetic device may comprise a magnetic means arranged on the shaft and a magnetic reader arranged for determining an angular position or frequency of magnetic variation caused by the rotating magnetic means in use. Additionally, suitable inductive or resistive sensors may be used for determining the angular velocity of the pedal. In order to determine an angle between the pedal and an external reference a gyroscope suitably arranged in the pedal may be used. Alternatively, an accelerometer, preferably a multi-axis accelerometer, may be used for this purpose. Still alternatively a tilt-meter or a combination of the named sensors may be used.

In a still further embodiment of the cycling arrangement according to the invention, the pedal further comprises a processor for collecting data from the first plurality of sensors and the second plurality of sensors. The processor may suitably be arranged to carry out signal processing of the collected data.

Preferably, the processor is arranged to wirelessly transmit the data to a base station for signal processing, which improves the user friendliness of the arrangement as a whole as no wiring is used. In addition, the cycling arrangement may be easily demounted and installed on a further suitable equipment, line a further bicycle, a simulator, or a fitness apparatus. Alternatively, the processor is arranged to store the data. It is also possible that the processor is arranged to perform data processing based on the collected data and to transmit a sought parameter, like a power produced by the cyclist, specific forces applied to the pedal, or components thereof, etc. The processor may be fed by a battery. Alternatively, the cycling arrangement according to the invention may further comprise a suitable generator arranged to generate electrical energy from a relative rotation of the pedal with respect to the shaft. This energy is then fed to the electrical components of the arrangement, like the sensors and the processor.

In a still further embodiment the cycling arrangement is arranged water tight. For example, a suitable removable cover may be envisaged to protect the cycling arrangement from ambient water. This is particularly practical for monitoring of a cyclist outdoors preventing rain and/or spatter from interacting with the sensors and electronics. Due to this feature the durability of the cycling arrangement is increased. It is noted that the cycling arrangement according to the invention is suitable not only for use in combination with an automotive apparatus, like a bicycle, but may also be arranged on a suitable imitator, like training equipment, a fitness unit, or the like. Preferably, the cycling arrangement and/or the system comprising the cycling arrangement and the automotive apparatus or an imitator thereof further comprise a display for feeding-back results of the signal processing to the cyclist and/or the coach. Suitable results comprise data on power produced by the user, and/or data on applied forced to the pedal or a distribution of applied forced to the pedal or data about cycling technique.

These and other aspects of the invention are further discussed with reference to figures.

Brief description

Figure 1 presents a schematic view of an embodiment of a cycling arrangement according to the invention.
Figure 2 presents a schematic view of a further embodiment of the cycling arrangement according to the invention.

Figure 3 presents a schematic view of an embodiment of a calculation algorithm.

Detailed description

Figure 1 presents a schematic view of an embodiment of a cycling arrangement according to the invention. The cycling arrangement comprises a pedal 2 mountable on a suitable pedal shaft 9 cooperating with a crank 9a. The pedal 2 cooperates with a cleat 7 which can be moved in a direction indicated by arrow 3 for fixedly arranging the cleat 7 on the pedal 2. The cleat is preferably manufactured from a rigid material, like a metal. Preferably aluminium is used due to its light weight. The cleat 7 comprises an attachment point for a suitable plurality of sensors for determining applied forces by a foot of the user (not shown) to the cleat 7. Preferably a force applied to a unit area in three directions (sidewards, downwards, upwards) is determined. It is also possible to determine force in more than three directions. In an embodiment shown in Figure 1 wherein only three forces and no torques are determined, four sensors 5a, 5b, 5c and 6 are used. The sensors preferably comprise flat pressure sensors which are arranged on respective surface portions of the cleat 7 for preferably directly contacting the user's shoe or a foot. The sensors 5a, 5b, 5c and 6 comprise the first plurality of sensors as is discussed with reference to the foregoing. The second plurality of sensors arranged for determining at least an angle and/or an angular velocity of the pedal as a function of time are arranged in a base portion of the pedal 2 when the pedal is moved along the direction indicated by arrow 8. It is noted that the pedal 2 undergoes a complex movement, as it is also being rotates or tilted with respect to the shaft 9. In accordance with the invention these movements are used to determine at least the power of the user produced during cycling or training. In an alternative embodiment more force sensors (at least five) may be used to determine sidewards, downwards and upwards forces and two torques simultaneously.

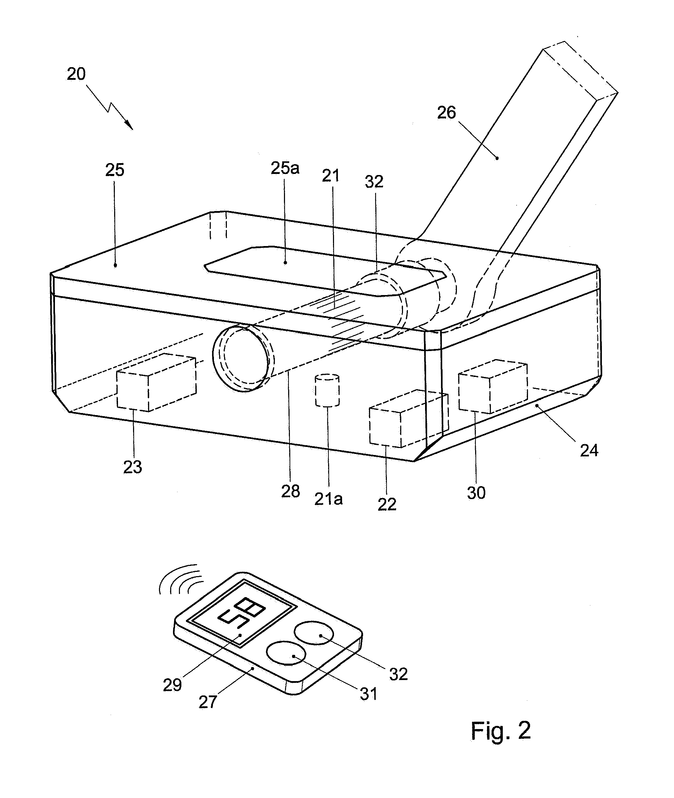

Figure 2 presents a schematic view of a further embodiment of the cycling arrangement according to the invention. The cycling arrangement 20 comprises a pedal arranged with a first portion 24, notably a base, and a second portion 25, notably a cleat. The first portion 24 is arranged on a shaft 28 cooperating with the crank 26. The cleat 25 comprises a suitable first plurality of the sensors for determining a force or its components applied by the user to the pedal, as is discussed with reference to Figure 1. The second plurality of sensors may comprise a pattern 21 arranged on the shaft 28 and an encoder 21a arranged to read the pattern and/or to determine a frequency of appearance of a suitable element of the pattern thereby determining the angular position or angulat velocity of the pedal with respect to the shaft. The cycling arrangement 20 may further comprises a gyroscope 22 arranged for measuring a tilt of the pedal 24 with respect to a suitable external reference, like a horizontal or a vertical line, or the like. Alternatively a suitable accelerometer may be used for that purpose. From the data of the gyroscope 20, accelerometers and/or tilt sensors an angle of the pedal with respect to the external reference can be determined. Based on the data on the angle of the pedal and the position of the encoder one obtains an angle of the crank enabling determination of the rotation velocity of the crank. The rotation velocity of the crank together with data on applied forces one obtains the power produced by the user.

The arrangement 20 further comprises a (micro)processor 23 for collecting data, and/or for storing data, and/or for executing suitable computation steps as is discussed with reference to the foregoing. Preferably, the arrangement 20 further comprises a suitable transmitter 30 for wirelessly transmitting suitable data to an outside unit, like a bicycle 27 or an external computer, a watch, physiological monitoring equipment, etc. In case the data is transmitted to the bicycle computer 27, it is preferably displayed on the display 29. The computer 27 may further comprise a suitable user interface, for example provided with one or more buttons for selecting a suitable menu.

Preferably, the arrangement 20 further comprises means for protecting from water. For example, a suitable cover or covers (not shown) may be arranged on the pedal portions 24, 25. The electrical components of the cycling arrangement 20 may be fed using a suitable battery. Ina preferred embodiment, the cycling arrangement 20 further comprises a built-in generator 32 arranged to generate electrical power from a relative motion between the pedal 24 and the shaft 29 and to feed the electrical components of the arrangement 20 accordingly.

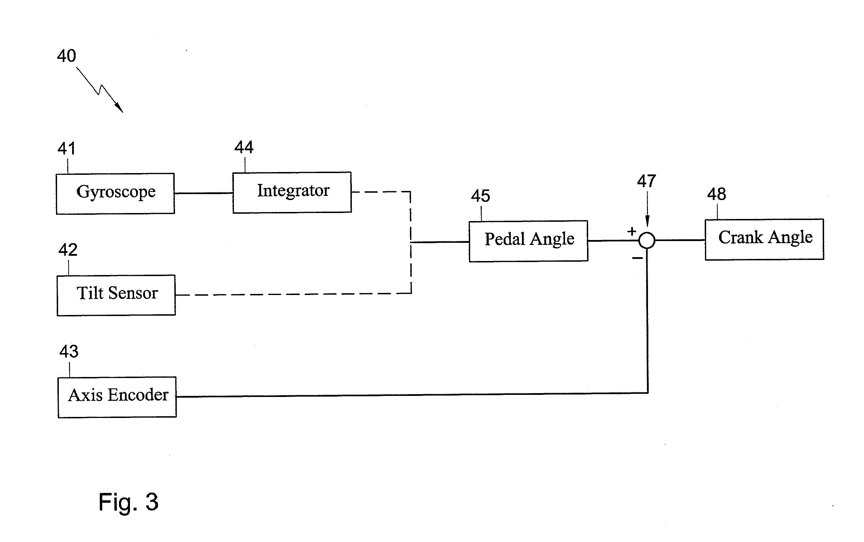

Figure 3 presents a schematic view of an embodiment of a calculation algorithm. The algorithm 40 is suitable for calculating a crank angle 48 using data collected by the cycling arrangement according to the invention. In particular, the calculating algorithm 40 uses data on an angle between the pedal and the crank. These data may be obtained by the gyroscope 41.

For example, the following formula can be used:

$$\alpha_{crank} = \alpha_{pedal} - \alpha_{pedal-crank},$$

wherein $\alpha_{crank}$ is measured by measurement of the vertical and horizontal acceleration on the pedal, combined with measurement of the rotational speed of the pedal using gyroscope. The acceleration and gyroscope signal may be combined using state of the art Kalman filtering or complimentary filtering as known to a person skilled in the art; $\alpha_{crank\_pedal}$ is the angle between pedal and crank, measured using an encoder mounted on or integrated into the axis of the pedal; $\alpha_{pedal}$ is the angle of the pedal.

Power applied by the cyclist can be calculated by using standard goniometric math. The component of the force on the pedal perpendicular to the crack is calculated, and multiplied with the crank length to determine applied torque. Differentiation on the $\alpha_{crank}$ signal yields the rotational velocity of the crank. The rotational velocity of the crank when multiplied with the applied torque this yields the applied power.

Data from the gyroscope 41 may be integrated using a suitable integrator unit 44. In addition to the angle data, the calculation algorithm 40 uses data on angle of the pedal in space. This data may be provided by a suitable tilt sensor 42. In order to estimate pedal angle data from the gyroscope and the tilt sensor are combined using per se known calculus. Next, data on the angular velocity of the pedal bout the crank may be collected using, for example, a built-in axis encoder 43. Finally, data from units 44, 42 and 43 is combined at suitable computing means 47 arranged to calculate the crank angle 48 using collected data. Preferably, the computing means 47 comprises a computer program executable on a suitable processing means wherein suitable per se known computation equations are worked out.

While specific embodiments have been described above, it will be appreciated that the invention may be practiced otherwise than as described. The descriptions above are intended to be illustrative, not limiting. Thus, it will be apparent to one skilled in the art that modifications may be made to the invention as described in the foregoing without departing from the scope of the claims set out below.

## Claims

1. A cycling arrangement comprising a pedal connectable to a pedal shaft and conceived for determining a set of parameters related to a use of the pedal during cycling, wherein the pedal comprises a first plurality of sensors for determining a *set* of forces executed on the pedal in use; and a second plurality of sensors for determining at least an angle and/or an angular velocity of the pedal and/or the crank as a function of time.

2. A cycling arrangement according to claim 1, wherein the first plurality of sensors comprises force sensors, preferably flat force sensors.

3. A cycling arrangement according to claim 1 or 2, wherein the pedal comprises a first portion and a second portion, preferably a cleat, fixedly cooperating with the first portion, the first plurality of the sensors being arranged in the first portion.

4. A cycling arrangement according to claim 3, wherein the second portion is arranged to fixedly engage to a shoe or a foot of a user.

**5.** A cycling arrangement according to any preceding claim, wherein the second plurality of sensors comprises an optical device or a magnetic device for determining the angle or angular velocity of the pedal about the pedal shaft.

**6.** A cycling arrangement according to claim 5, wherein the optical device comprises a pattern arranged on the shaft and an encoder arranged for reading the pattern.

**7.** A cycling arrangement according to claim 6, wherein the magnetic device comprises a magnetic means arranged on the shaft and a magnetic reader arranged for determining a frequency of magnetic variation caused by the rotating magnetic means in use.

**8.** A cycling arrangement according to any one of the preceding claim, wherein the second plurality of sensors comprises a gyroscope for determining the angular velocity of the pedal with respect to an external reference.

**9.** A cycling arrangement according to any one of the preceding claim, wherein the second plurality of sensors comprises a tilt sensor or accelerometer for determining an angle of the pedal with respect to an external reference.

**10.** A cycling arrangement according to any preceding claim, wherein the pedal further comprises a processor for collecting data from the first plurality of sensors and the second plurality of sensors.

**11.** A cycling arrangement according to claim 10, wherein the processor is arranged to wirelessly transmit the data to a base station for signal processing.

**12.** A cycling arrangement according to claim 10, wherein the processor is arranged to store the data.

**13.** A cycling arrangement according to any one of the preceding claims being water tight.

**14.** A cycling arrangement according to any one of the preceding claims, further comprising a generator arranged to generate electrical energy from a relative rotation of the pedal with respect to the shaft for feeding electric components of the arrangement.

**15.** An apparatus comprising a cycling arrangement according to any one of the receding claims and a cycling unit or a cycling unit imitator.

**16.** An apparatus according to claim 15, wherein the system further comprises a display for feeding-back results of the signal processing.

Fig. 1

Fig. 2

Fig. 3

**European Patent Office**

**EUROPEAN SEARCH REPORT**

Application Number

EP 07 15 0237

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 101 58 600 A1 (PETZKE WOLFGANG [DE]) 12 June 2003 (2003-06-12) | 1-3,5, 10,13,15 | INV. B62J39/00 B62M3/08 |
| Y | * claims; figures * | 4,6,7, 10-12,16 | |
| | ----- | | |
| Y | WO 2006/053977 A (LOOK CYCLE INTERNAT [FR]; CHAMPOUX YVAN [CA]; DROUET JEAN-MARC [CA]; R) 26 May 2006 (2006-05-26) | 4 | |
| A | * claims; figures * | 1,11,12, 14 | |
| | ----- | | |
| Y | WO 00/46581 A (CURTIS INSTR [US]) 10 August 2000 (2000-08-10) * claims; figures * | 6,7 | |
| | ----- | | |
| Y | EP 1 463 013 A (SHIMANO KK [JP]) 29 September 2004 (2004-09-29) * claims; figures * | 10-12,16 | |
| | ----- | | |
| A | JP 11 059527 A (NIKKO KK) 2 March 1999 (1999-03-02) * abstract * | 1,14 | TECHNICAL FIELDS SEARCHED (IPC) |
| | ----- | | B62M B62J |
| A | FR 2 724 728 A (PETZKE WOLFGANG [DE]) 22 March 1996 (1996-03-22) * claims; figures * | 1 | |
| | ----- | | |
| A | DE 94 15 162 U1 (PETZKE WOLFGANG DIPL ING [DE]) 24 November 1994 (1994-11-24) * claims; figures * | 1 | |
| | ----- | | |
| A | WO 02/20094 A (OBERHEIM RAINER [DE]) 14 March 2002 (2002-03-14) * claims; figures * | 1 | |
| | ----- | | |

The present search report has been drawn up for all claims

| Place of search | Date of completion of the search | Examiner |
|---|---|---|
| The Hague | 4 June 2008 | Grunfeld, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 15 0237

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2008

| Patent document cited in search report | | Publication date | Patent family member(s) | | Publication date |
|---|---|---|---|---|---|
| DE 10158600 | A1 | 12-06-2003 | NONE | | |
| WO 2006053977 | A | 26-05-2006 | CA<br>EP<br>US | 2485324 A1<br>1812282 A1<br>2008040937 A1 | 16-05-2006<br>01-08-2007<br>21-02-2008 |
| WO 0046581 | A | 10-08-2000 | CN<br>EP<br>US | 1297528 A<br>1076812 A1<br>6439067 B1 | 30-05-2001<br>21-02-2001<br>27-08-2002 |
| EP 1463013 | A | 29-09-2004 | CN<br>JP<br>JP<br>TW<br>US | 1541885 A<br>3777360 B2<br>2004291875 A<br>239922 B<br>2004220712 A1 | 03-11-2004<br>24-05-2006<br>21-10-2004<br>21-09-2005<br>04-11-2004 |
| JP 11059527 | A | 02-03-1999 | NONE | | |
| FR 2724728 | A | 22-03-1996 | JP | 8145824 A | 07-06-1996 |
| DE 9415162 | U1 | 24-11-1994 | DE | 4435174 A1 | 21-03-1996 |
| WO 0220094 | A | 14-03-2002 | AU<br>DE<br>EP<br>TW | 1497102 A<br>10044701 C1<br>1326683 A1<br>500915 B | 22-03-2002<br>23-05-2002<br>16-07-2003<br>01-09-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. BOYD et al.** An improved accuracy six-load component pedal dynamometer for cycling. *J. Biomechanics,* 1996, vol. 29 (8), 1105-1110